# EUROPEAN PATENT APPLICATION

(11) **EP 4 576 513 A1**
(43) Date of publication of application: **25.06.2025**
(21) Application number: 23874743.0
(22) Date of filing: 27.09.2023
(51) Int. Cl.: H02K 5/20, F16H 57/02, H02K 5/22, H02K 9/19

(54) **VEHICULAR DRIVE DEVICE**

(30) Priority: 07.10.2022 JP 2022162120
(71) Applicant: AISIN CORPORATION, Kariya-shi, Aichi 448-8650 (JP)
(72) Inventor: SUGIMOTO Noriaki, Kariya-shi, Aichi 448-8650 (JP); KAWADE Shunya, Kariya-shi, Aichi 448-8650 (JP); SUWA Tatsuro, Kariya-shi, Aichi 448-8650 (JP); SUZUKI Tomoyuki, Kariya-shi, Aichi 448-8650 (JP)
(74) Representative: Kramer Barske Schmidtchen Patentanwälte PartG mbB
(86) International application number: PCT/JP2023/035269
(87) International publication number: WO 2024/075616

(57) **Abstract**

There is disclosed a vehicular drive device including a rotating electrical machine, a case that houses the rotating electrical machine, and a channel forming member disposed between an outer peripheral surface of the rotating electrical machine and an inner peripheral surface of the case, and forming a refrigerant channel through which a refrigerant passes, in which the channel forming member has a cylindrical shape and has one end side in an axial direction fastened to the case, and in a case where a rectangle circumscribing an outer shape of the rotating electrical machine and having two sides parallel to an up-down direction as viewed in an axial direction, each of fastening parts of the channel forming member with respect to the case overlaps at least one corner of four corners of the rectangle as viewed in an axial direction.

## Description

### TECHNICAL FIELD

The present disclosure relates to a vehicular drive device.

### BACKGROUND ART

A technique is known in which a channel forming member forming a refrigerant channel (cooling water passage) around a rotating electrical machine is fastened to a case (outer case) paired with the channel forming member (inner case).

### CITATIONS LIST

### PATENT LITERATURE

Patent Literature 1: US 2020/0235640 A

### SUMMARY OF INVENTION

### TECHNICAL PROBLEMS

However, in a conventional technique as described above, it is difficult to fasten the rotating electrical machine to the case together with the channel forming member without significantly increasing a size of a vehicular drive device.

Accordingly, in one aspect, the present disclosure intends to fasten a rotating electrical machine to a case together with a channel forming member without significantly increasing a size of a vehicular drive device.

### SOLUTIONS TO PROBLEMS

In one aspect, there is provided a vehicular drive device including
a rotating electrical machine,
a case that houses the rotating electrical machine, and
a channel forming member disposed between an outer peripheral surface of the rotating electrical machine and an inner peripheral surface of the case, and forming a refrigerant channel through which a refrigerant passes, in which
the channel forming member has a cylindrical shape and has one end side in an axial direction fastened to the case, and
in a case where a rectangle circumscribing an outer shape of the rotating electrical machine and having two sides parallel to an up-down direction as viewed in an axial direction, each of fastening parts of the channel forming member with respect to the case overlaps at least one corner of four corners of the rectangle as viewed in an axial direction.

### ADVANTAGEOUS EFFECTS OF INVENTION

In one aspect, according to the present disclosure, it is possible to fasten the rotating electrical machine to the case together with the channel forming member without significantly increasing a size of the vehicular drive device.

### BRIEF DESCRIPTION OF DRAWINGS

FIG. 1 is a schematic top view showing a state of a vehicular drive device mounted on a vehicle.
FIG. 2 is a cross-sectional view of the vehicular drive device.
FIG. 2A is a skeleton diagram showing the vehicular drive device.
FIG. 3 is a side view schematically showing the vehicular drive device according to the present embodiment.
FIG. 4 is a perspective view of a channel forming member.
FIG. 4A is an enlarged view of a portion Q4 in FIG. 4.
FIG. 5 is a schematic view of a refrigerant channel formed by the channel forming member.
FIG. 6A is a cross-sectional view of a portion of the refrigerant channel.
FIG. 6B is a side view schematically showing a positional relationship among a first output member, a refrigerant supply unit, and a refrigerant discharge unit.
FIG. 6C is an enlarged view of a portion Q6 in FIG. 2.
FIG. 7 is an explanatory view of preferable arrangement of fastening parts, and is a side view schematically showing the vehicular drive device according to the present embodiment.
FIG. 7A is a view schematically showing arrangement of a part of the fastening parts according to a comparative example, by superimposing the part with dotted lines on the drawing in FIG. 7.
FIG. 8 is an explanatory view of preferable arrangement of the fastening parts, and is a side view schematically showing a relation with a wiring connector.
FIG. 9 is a side view from an A2 side, schematically showing the vehicular drive device according to the present embodiment.

### DESCRIPTION OF EMBODIMENTS

Hereinafter, each embodiment will be described in detail with reference to the accompanying drawings. Note that dimension ratios in the drawings are merely examples and are not limited thereto, and shapes and the like in the drawings may be partially exaggerated for convenience of description.

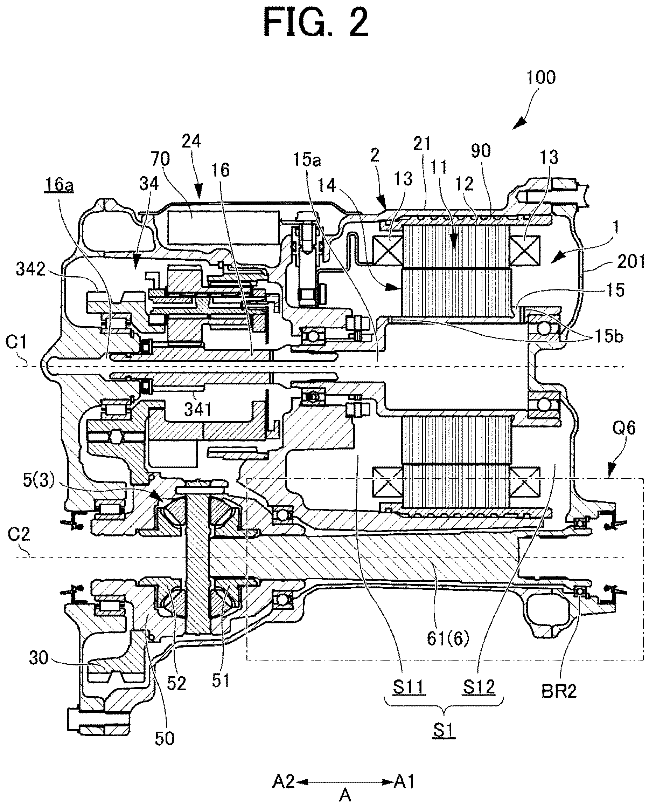

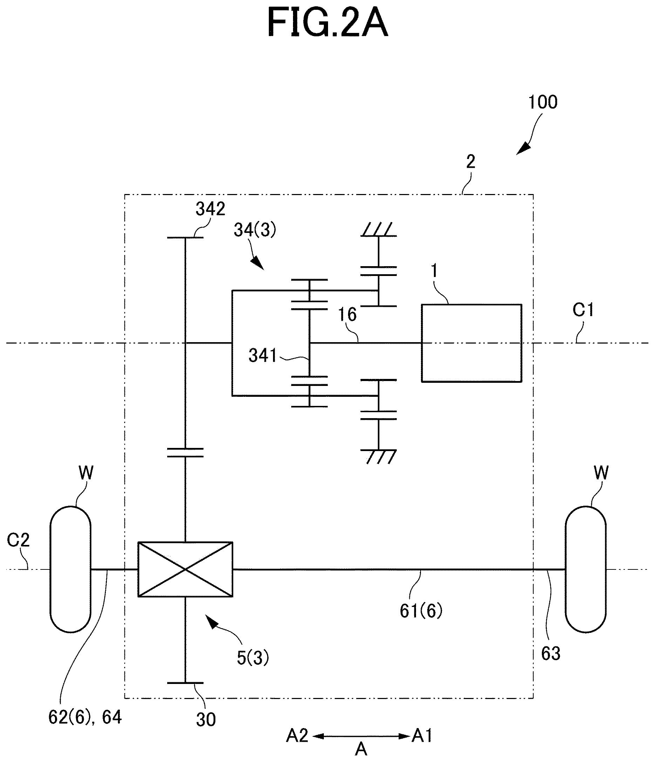

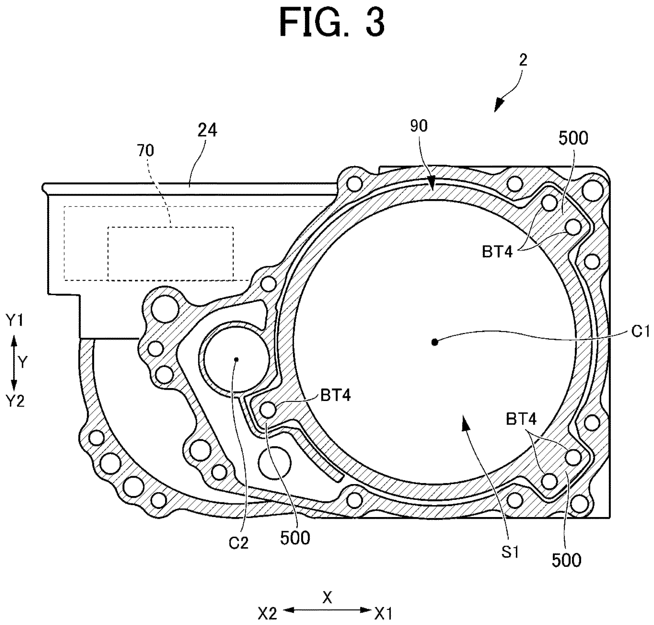

In the following description, a Y direction (refer to FIG. 3 and the like) correspond to an up-down direction in a state where a vehicular drive device 100 is in use, that is, an up-down direction with respect to an orientation in which the vehicular drive device 100 in use is disposed. Then, a Y1 side and a Y2 side correspond to an upper side and a lower side along the Y direction. Note that the up-down direction is not necessarily parallel to a vertical direction, and it is only required that a vertical direction component is predominant. Furthermore, in a case where the up-down direction when the vehicular drive device 100 is in use is significantly greatly inclined with respect to the vertical direction, the up-down direction in the following description may be interpreted as an up-down direction when the vehicular drive device 100 as a single unit (product) is placed on a flat surface (a similar applies to a case of a horizontal direction). Furthermore, orientations of respective members in the following description represent orientations in a state where the respective members are fitted to the vehicular drive device 100. Furthermore, terms related to dimensions, disposition orientation, disposition position, and the like of each member are concepts including a state of those having a difference due to an error (an allowable error in manufacturing). An A direction (refer to FIG. 2 and the like) corresponds to an axial direction, and an A1 side and an A2 side along the A direction are defined in FIG. 2 and the like. Furthermore, an X direction (refer to FIG. 3 and the like) is a direction orthogonal to both the A direction and the Y direction, and an X1 side and an X2 side along the X direction are defined in FIG. 3 and the like.

In the present specification, "drivingly coupled" state refers to a state in which two rotational elements are coupled so as to be able to transmit drive force (synonymous with torque), and includes a state in which the two rotational elements are coupled so as to rotate integrally, or a state in which the two rotational elements are coupled so as to be able to transmit drive force via one or two or more transmission members. Such a transmission member includes various members (for example, a shaft, a gear mechanism, a belt, a chain, and the like) that transmit rotation at the same speed or at a different speed. Note that an engagement device (for example, a friction engagement device, a meshing engagement device, or the like) that selectively transmits rotation and drive force may be included as the transmission member.

Furthermore, in the present specification, "communication" refers to a state in which two spatial elements in fluid communication with each other. That is, "communication" refers to a state in which fluid can move back and forth between the two spatial elements. In this case, the two spatial elements may communicate directly or indirectly (that is, via another spatial element).

In the present specification, the "rotating electrical machine" is used as a concept including any of a motor (electric motor), a generator (generator), and a motor-generator that functions as both the motor and the generator as necessary. Furthermore, in the present specification, with respect to arrangement of two members, "to overlap as viewed in a specific direction" means that, in a case where a virtual straight line parallel to the direction of a line of sight is moved in each direction orthogonal to the virtual straight line, a region where the virtual straight line intersects both of the two members exists in at least a part. Furthermore, in the present specification, with respect to arrangement of two members, "disposition regions in a specific direction overlap" means that at least a part of a disposition region in a specific direction of one member is included in a disposition region in a specific direction of another member.

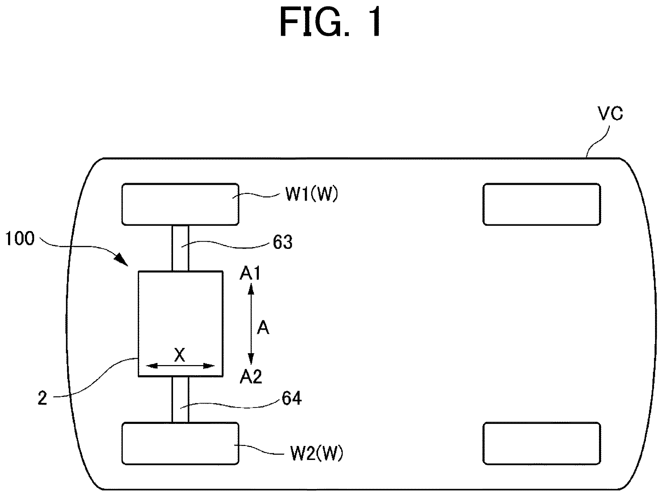

FIG. 1 is a schematic top view showing a state of the vehicular drive device 100 mounted on a vehicle VC. FIG. 2 is a cross-sectional view of the vehicular drive device 100. FIG. 2A is a skeleton diagram showing the vehicular drive device 100.

As schematically shown in FIG. 2A, the vehicular drive device 100 includes a rotating electrical machine 1, a pair of output members 6 drivingly coupled to a pair of wheels W (refer to FIG. 1), and a transmission mechanism 3 that transmits drive force between the rotating electrical machine 1 and the pair of output members 6. The vehicular drive device 100 further includes a case 2 that houses the rotating electrical machine 1. The case 2 also houses the pair of output members 6 and the transmission mechanism 3. Note that, in a modification, the case 2 may house only one of the pair of output members 6. Furthermore, application of the vehicular drive device 100 is applicable to any vehicle having the rotating electrical machine 1, such as an electric vehicle or a hybrid vehicle, and is applicable to any vehicle with a drive system such as a front wheel drive or a rear wheel drive. Furthermore, a drive source may be only an engine (internal combustion engine).

A first output member 61, which is one of the pair of output members 6, is drivingly coupled to a first wheel W1, which is one of the pair of wheels W. A second output member 62, which is another one of the pair of output members 6, is drivingly coupled to a second wheel W2, which is another one of the pair of wheels W. As shown in FIG. 1, the vehicle VC on which the vehicular drive device 100 is mounted includes a first drive shaft 63 that rotates integrally with the first wheel W1 and a second drive shaft 64 that rotates integrally with the second wheel W2. The first drive shaft 63 is coupled to the first wheel W1 via, for example, a constant-velocity joint, and the second drive shaft 64 is coupled to the second wheel W2 via, for example, a constant-velocity joint. Then, the first output member 61 is coupled to the first drive shaft 63 so as to rotate integrally with the first drive shaft 63, and the second output member 62 is coupled to the second drive shaft 64 so as to rotate integrally with the second drive shaft 64. Note that the first output member 61 may be in a form of an intermediate shaft.

The vehicular drive device 100 transmits output torque of the rotating electrical machine 1 to the pair of wheels W via the pair of output members 6 to cause the vehicle VC equipped with the vehicular drive device 100 to travel. That is, the rotating electrical machine 1 is a drive force of the pair of wheels W. The pair of wheels W is a pair of left and right wheels (for example, a pair of left and right front wheels or a pair of left and right rear wheels) in the vehicle VC. The rotating electrical machine 1 may be, for example, an alternating-current rotating electrical machine driven by three-phase alternating current power.

As shown in FIG. 2, the rotating electrical machine 1 and the pair of output members 6 are disposed separately on two axes (specifically, a first axis C1 and a second axis C2) parallel to each other. Specifically, the rotating electrical machine 1 is disposed on the first axis C1, and the pair of output members 6 is disposed on the second axis C2 different from the first axis C1. The first axis C1 and the second axis C2 are axes (virtual axes) arranged parallel to each other. The transmission mechanism 3 includes an output gear (ring gear) 30 drivingly coupled to at least one of the pair of output members 6, coaxially with the pair of output members 6 (that is, on the second axis C2).

The rotating electrical machine 1 is, for example, inner rotor type. In the rotating electrical machine 1, a rotor 14 that is rotatable about the first axis C1 is disposed radially inner side of a stator 11 (refer to FIG. 2).

The transmission mechanism 3 includes a deceleration mechanism 34 in a power transmission path between the rotating electrical machine 1 and an output gear 30. The deceleration mechanism 34 is arbitrary, and may include a deceleration mechanism using a counter gear, a deceleration mechanism using a planetary gear, and the like. In the present embodiment, as an example, the deceleration mechanism 34 includes a planetary gear mechanism, and the deceleration mechanism 34 is disposed coaxially with the rotating electrical machine 1. An output gear (carrier) 342 of the deceleration mechanism 34 meshes with the output gear 30 of a differential gear mechanism 5 in a radial direction. Such a vehicular drive device 100 can have a compact configuration including two axes (the first axis C1 and the second axis C2). Note that, in a modification, the vehicular drive device 100 may have three or more axes.

In the present embodiment, the deceleration mechanism 34 is disposed coaxially with the rotating electrical machine 1 (that is, on the first axis C1) in such a manner as to be drivingly coupled to the rotating electrical machine 1. In the present embodiment, as an example, the rotor 14 of the rotating electrical machine 1 rotates integrally with an input member 16 together with a sun gear 341 of the deceleration mechanism 34.

Furthermore, the transmission mechanism 3 further includes the differential gear mechanism 5. The differential gear mechanism 5 distributes the drive force transmitted from a rotating electrical machine 1 side to the pair of output members 6. In the example shown in FIG. 2, the differential gear mechanism 5 distributes rotation of the output gear 30 to a first side gear 51 and a second side gear 52. The differential gear mechanism 5 may be disposed coaxially with the pair of output members 6 (that is, on the second axis C2). Note that the differential gear mechanism 5 may be a bevel-gear type differential gear mechanism, and the output gear 30 may be coupled to a differential case part 50 so as to rotate integrally with the differential case part 50 included in the differential gear mechanism 5.

Next, a water-cooling structure of the rotating electrical machine 1 according to the present embodiment and components (a channel forming member 90 and the like) related thereto will be described with reference to FIG. 3 and subsequent drawings.

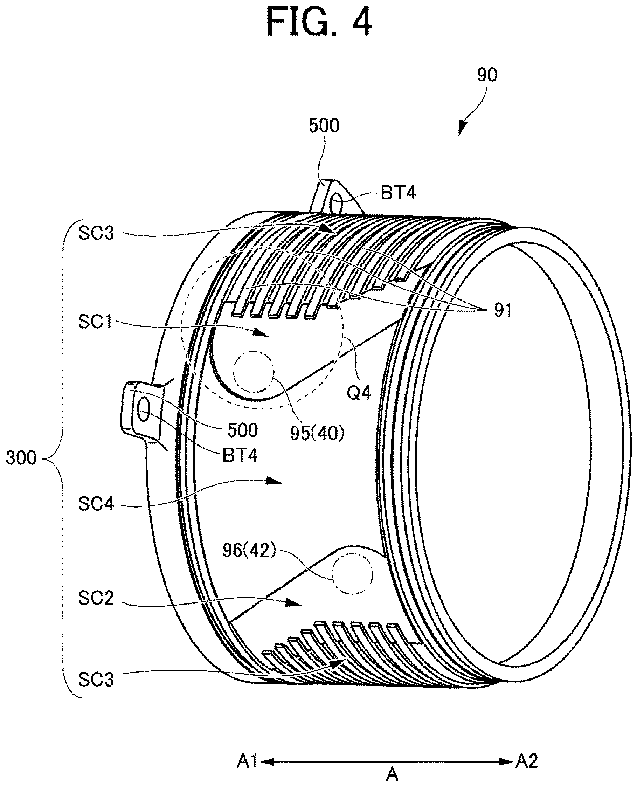

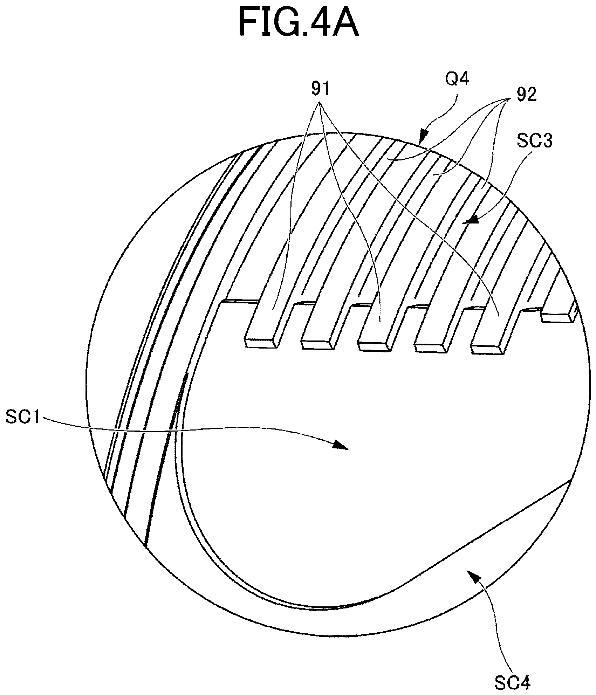

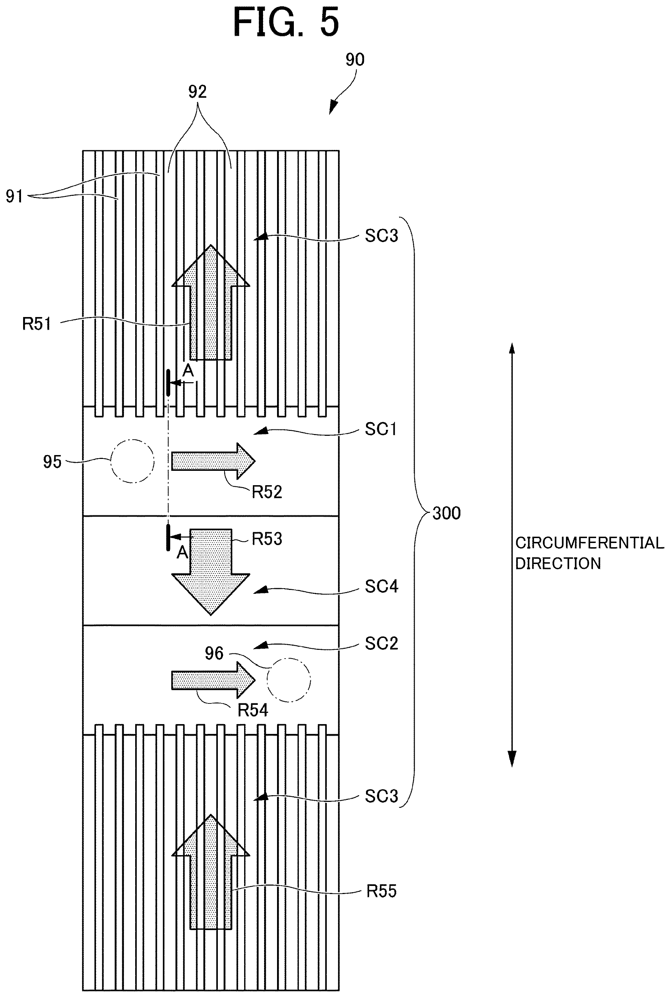

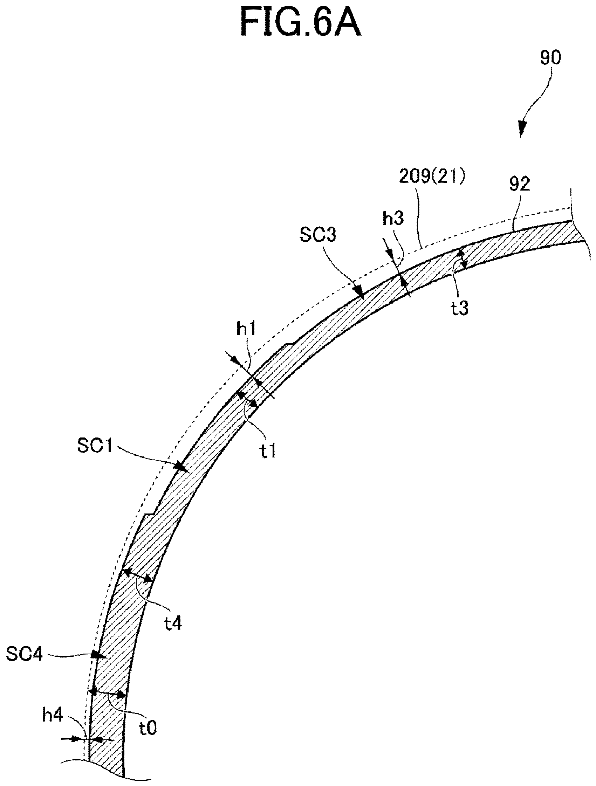

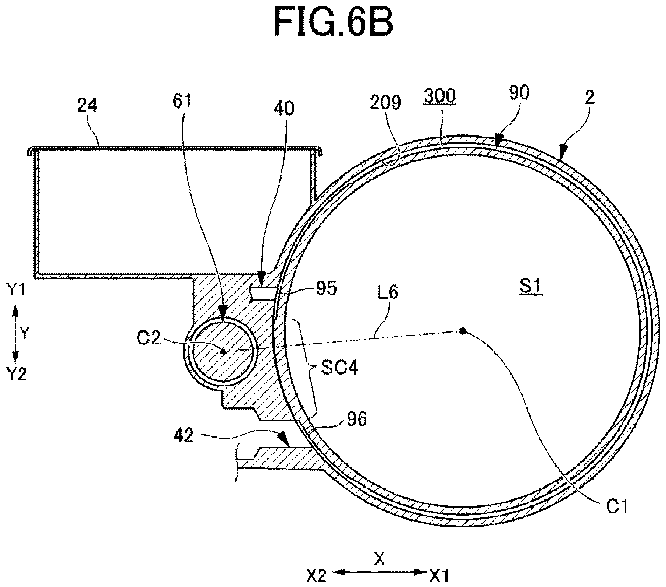

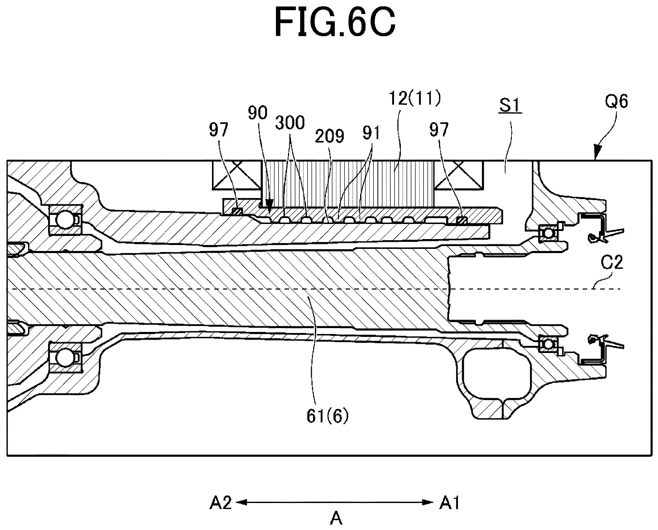

FIG. 3 is a side view schematically showing the vehicular drive device 100 according to the present embodiment. In FIG. 3, a motor cover member 201 is not shown so that a state of an inside of a motor housing chamber S1 can be seen. Furthermore, in FIG. 3, an inverter device 70 inside an inverter case part 24 is schematically shown by a dotted line. FIG. 4 is a perspective view of the channel forming member 90. In FIG. 4 (a similar applies to FIG. 5), positions of an inlet part 95 and outlet part 96 with respect to a refrigerant channel 300 are schematically shown as projection views (dash-dot circles). FIG. 4A is an enlarged view of a portion Q4 in FIG. 4. FIG. 5 is a schematic view of the refrigerant channel 300 formed by the channel forming member 90, and is an explanatory view in which an outer peripheral surface of the channel forming member 90 is developed on a plane. FIG. 6A is a cross-sectional view of a portion (portion along the line A-A in FIG. 5) of the refrigerant channel 300. FIG. 6B is a side view schematically showing a positional relationship among the first output member 61, a refrigerant supply unit 40, and a refrigerant discharge unit 42. FIG. 6C is an enlarged view of a portion Q6 in FIG. 2.

The water-cooling structure of the rotating electrical machine 1 according to the present embodiment is a structure for cooling the rotating electrical machine 1 with cooling water. Note that the cooling water may be, for example, water containing long life coolant (LLC), and may be circulated by a water pump (not shown). Note that a heat radiation unit such as a radiator (not shown) may be provided in the circulation path of the cooling water. Furthermore, the cooling water may be utilized not only for cooling the rotating electrical machine 1 but also for cooling another component, for example, the inverter device 70 or the like electrically connected to the rotating electrical machine 1.

As shown in FIG. 4, the water-cooling structure of the rotating electrical machine 1 according to the present embodiment may include the refrigerant supply unit 40, the refrigerant discharge unit 42, and the channel forming member 90.

The refrigerant supply unit 40 communicates with, for example, a discharge side of the water pump (not shown), and supplies the cooling water to the refrigerant channel 300 (described later) formed by the channel forming member 90.

The refrigerant discharge unit 42 communicates with, for example, a suction side of the water pump (not shown), and supplies (discharges) the cooling water from the refrigerant channel 300 (described later) formed by the channel forming member 90 to the water pump (not shown).

As shown in FIG. 6B, the refrigerant supply unit 40 and the refrigerant discharge unit 42 may be provided on upper and lower sides with the first output member 61 interposed therebetween. In this case, the refrigerant supply unit 40 and the refrigerant discharge unit 42 can be established by effectively utilizing space around the first output member 61.

As shown in FIG. 4, the channel forming member 90 has a cylindrical shape having an inner peripheral surface radially facing an outer peripheral surface of the rotating electrical machine 1. The channel forming member 90 forms the refrigerant channel 300 around the rotating electrical machine 1.

The channel forming member 90 may be formed of a material having good thermal conductivity, such as aluminum, for example In the present embodiment, as an example, the channel forming member 90 is fitted to a stator core 12 of the stator 11 by shrink-fitting, for example. Thus, adhesion (interference) between the channel forming member 90 and the stator core 12 can be enhanced, by which thermal resistance between the channel forming member 90 and the stator core 12 can be reduced. Note that, in another embodiment, the channel forming member 90 may be integrally formed with the stator core 12 by casting or the like. Furthermore, the channel forming member 90 may be formed as a part of the case 2.

In the present embodiment, as an example, as shown in FIG. 3, the channel forming member 90 is in a form of the inner case fastened to the case 2. In this case, an axially one end side of the channel forming member 90 has a plurality of fastening parts 500 as shown in FIG. 3. A preferable example of arrangement of the plurality of fastening parts 500 will be described later.

The channel forming member 90 is inserted into a space having a columnar shape (motor housing chamber S1) in the case 2. At this time, the outer peripheral surface of the channel forming member 90 radially faces an inner peripheral surface (inner peripheral surface that bounds the plurality of fastening parts 500) of a motor case part 21 (refer to FIG. 2) of the case 2. Note that, hereinafter, an inner peripheral surface of the case 2 surrounding the channel forming member 90 in this manner is also referred to as a "channel forming surface 209 of the case 2". Note that an inner diameter of the channel forming surface 209 of the case 2 may be a constant value larger by a base wall thickness t0 (refer to FIG. 6A) of the channel forming member 90 than a base outer diameter of the stator core 12.

The channel forming member 90 cooperates with the channel forming surface 209 of the case 2 to form the refrigerant channel 300. Specifically, the refrigerant channel 300 is formed between the outer peripheral surface of the channel forming member 90 and the channel forming surface 209 of the case 2 in a radial direction.

The refrigerant channel 300 may extend in a circumferential direction such that the cooling water flows across the circumferential direction overall. Furthermore, the refrigerant channel 300 may be formed so as to radially face the outer peripheral surface of the stator core 12 across the axial direction overall of the stator core 12 of the rotating electrical machine 1. Note that the refrigerant channel 300 is closed at both axial ends. For example, between the channel forming member 90 and the channel forming surface 209 of the case 2, seal members 97 (refer to FIG. 6C) may be provided at both axial end portions of the channel forming member 90 across the circumferential direction overall.

In the present embodiment, as shown in FIGS. 4 and 5, the refrigerant channel 300 roughly includes a first circumferential-direction section SC1, a second circumferential-direction section SC2, a third circumferential-direction section SC3, and a fourth circumferential-direction section SC4.

The first circumferential-direction section SC1 is a section including the inlet part 95. The refrigerant supply unit 40 is connected to the inlet part 95. Therefore, the cooling water is introduced into the refrigerant channel 300 from the inlet part 95. Note that the inlet part 95 may be in a form of an opening at an end portion of the refrigerant supply unit 40.

The second circumferential-direction section SC2 is a section including the outlet part 96. The refrigerant discharge unit 42 is connected to the outlet part 96. Therefore, the cooling water introduced into the refrigerant channel 300 is discharged to outside of the refrigerant channel 300 via the outlet part 96. Note that the outlet part 96 may be in a form of an opening at an end portion of the refrigerant discharge unit 42.

The third circumferential-direction section SC3 may be a section extending between the first circumferential-direction section SC1 and the second circumferential-direction section SC2 in the circumferential direction and having a longest circumferential length. In the third circumferential-direction section SC3, the channel forming member 90 has protrusions 91 projecting in the radial direction in a manner of reducing a cross-sectional area of the refrigerant channel 300. In the present embodiment, the plurality of protrusions 91 are in a form of protruding stripes or ribs continuously extending in the circumferential direction, and are formed in such a manner as to be arranged in the axial direction. However, in another embodiment, the protrusions 91 may be implemented in another form or another arrangement. For example, protrusions having a columnar shape may be arranged in a staggered manner. An upper surface (surface on a radially outer side) of each of the protrusions 91 may be in contact with the channel forming surface 209 of the case 2 in the radial direction, or may be slightly separated from the channel forming surface 209 of the case 2. In either case, a portion of the refrigerant channel 300 in the third circumferential-direction section SC3 is mainly formed by a portion where the protrusions 91 are not formed.

The fourth circumferential-direction section SC4 may be a section extending between the first circumferential-direction section SC1 and the second circumferential-direction section SC2 in the circumferential direction and having a circumferential length significantly shorter than the circumferential length of the third circumferential-direction section SC3. The channel forming member 90 may not have such protrusions as the protrusions 91 in the fourth circumferential-direction section SC4. In the present embodiment, the channel forming member 90 basically has a flat surface (outer peripheral surface) in the fourth circumferential-direction section SC4.

In the present embodiment, when the cooling water is introduced into the inlet part 95 of the refrigerant channel 300, the cooling water flows in the first circumferential-direction section SC1 in the axial direction (refer to the arrow R52 in FIG. 5) and is distributed to the third circumferential-direction section SC3 and the fourth circumferential-direction section SC4 (refer to the arrows R51 and R53 in FIG. 5). Then, when the cooling water (refer to the arrows R51 and R55 in FIG. 5) flowing in the third circumferential-direction section SC3 in the circumferential direction reaches the second circumferential-direction section SC2, the cooling water is discharged from the outlet part 96 while flowing in the axial direction (refer to the arrow R54 in FIG. 5). Furthermore, when the cooling water (refer to the arrows R53 in FIG. 5) flowing in the fourth circumferential-direction section SC4 in the circumferential direction (which may have an axial direction component) reaches the second circumferential-direction section SC2, the cooling water is discharged from the outlet part 96 while flowing in the axial direction (refer to the arrow R54 in FIG. 5).

Incidentally, in general, fluid tends to flow in a channel having a small resistance. In this regard, in the present embodiment, there is a resistance element such as the protrusions 91 in the third circumferential-direction section SC3. Therefore, if there is a channel portion having a significantly smaller resistance between the inlet part 95 and the outlet part 96 than the third circumferential-direction section SC3, there is a possibility that the cooling water does not flow in sufficient amount through the third circumferential-direction section SC3. In this case, cooling (cooling with cooling water) of a portion of the entire stator core 12, the portion radially facing the third circumferential-direction section SC3, may be insufficient. In particular, in a case where the resistance of the channel portion via the fourth circumferential-direction section SC4 from the inlet part 95 to the outlet part 96 is significantly small unlike a relation in the present embodiment as described later, the cooling (cooling with cooling water) of the portion radially facing the third circumferential-direction section SC3 may be insufficient.

Accordingly, in the present embodiment, a channel structure in the fourth circumferential-direction section SC4 may be adapted such that a line loss coefficient in the fourth circumferential-direction section SC4 is equivalent to a line loss coefficient in the third circumferential-direction section SC3. Note that the line loss coefficient may be evaluated as line loss coefficient = (pressure loss)/(flow rate)^{α}, where α > 1. Alternatively, from a similar viewpoint, the channel structure in the fourth circumferential-direction section SC4 may be adapted such that a flow rate in the fourth circumferential-direction section SC4 is equivalent to a flow rate in the third circumferential-direction section SC3. Thus, a flow rate (and cooling capacity associated therewith) of the cooling water flowing through the refrigerant channel 300 can be equalized in the circumferential direction.

However, the flow rate in the fourth circumferential-direction section SC4 and the flow rate in the third circumferential-direction section SC3 may correspond to a ratio between the circumferential length of the fourth circumferential-direction section SC4 and the circumferential length of the third circumferential-direction section SC3. This is because the longer the circumferential length, the more useful high cooling capacity (that is, low temperature of the cooling water is maintained even on a downstream side).

In the present embodiment, a maximum value of a radial width of a cross section of the refrigerant channel 300 is smallest in the fourth circumferential-direction section SC4 and largest in the third circumferential-direction section SC3 among the first circumferential-direction section SC1 to the fourth circumferential-direction section SC4. Thus, resistance in the fourth circumferential-direction section SC4 can be relatively high. Therefore, the flow rate of the cooling water flowing in the third circumferential-direction section SC3 can be appropriately ensured. Note that, in the present embodiment, the protrusions 91 are provided in the third circumferential-direction section SC3. Therefore, the maximum value of the radial width of the cross section of the refrigerant channel 300 in the third circumferential-direction section SC3 is generated at a portion not having the protrusions 91.

Furthermore, in the present embodiment, when the maximum value of the radial width of the cross section of the refrigerant channel 300 is assumed to be h1 to h4 (refer to FIG. 6A, in which h2 is not shown) in the first circumferential-direction section SC1 to the fourth circumferential-direction section SC4, respectively, relations of h4 < h1 < h3 and h4 < h2 < h3 hold. Note that, at this time, h1=h2 or h1 ≈ h2 may be satisfied. Furthermore, in the fourth circumferential-direction section SC4, the maximum value of the radial width of the cross section of refrigerant channel 300 corresponds to a radial width of a portion excluding the protrusions 91 (that is, a radial width of grooves 92 adjacent to the protrusion 91).

In the present embodiment, as described above, the channel forming member 90 is disposed between the stator core 12 and the channel forming surface 209 of the case 2, and a radial distance between the stator core 12 and the channel forming surface 209 of the case 2 is substantially constant across the circumferential direction overall (that is, a constant value corresponding to the base wall thickness t0). Therefore, in the present embodiment, the above-described relations of h4 < h1 < h3 and h4 < h2 < h3 can be achieved by a change in a wall thickness of the channel forming member 90. In this case, when minimum values of a radial wall thickness of portions forming the refrigerant channel 300 in the channel forming member 90 are assumed to be t1 to t4 in the first circumferential-direction section SC1 to the fourth circumferential-direction section SC4, respectively, relations of t4 > t1 > t3 and t4 > t2 > t3 hold. Alternatively, in other words, for the fourth circumferential-direction section SC4, when the wall thickness of the portion excluding the protrusions 91 is t4, relations of t4 > t1 > t3 and t4 > t2 > t3 hold. Note that, at this time, t1 = t2 or t1 ≈ t2 may be satisfied. For example, t1 = (t4 + t3)/2 may be satisfied.

Note that the portion forming the refrigerant channel 300 in the channel forming member 90 is a portion through which the refrigerant substantially passes, and may be, for example, a portion of an area radially facing the stator core 12 or a portion of an area between the inlet part 95 and the outlet part 96 in the axial direction.

Here, as in the present embodiment, when there is a relatively large difference in wall thickness in the channel forming member 90, stress concentration is likely to occur due to the difference. In particular, in the present embodiment, the channel forming member 90 is shrink fitted, stress concentration at a time of the shrink fitting tends to be a problem. Furthermore, because the channel forming member 90 may thermally shrink due to influence of heat from the stator core 12 or cooling water, thermal stress is likely to occur.

Meanwhile, in the present embodiment, although there is a relatively large difference in wall thickness (= t4 - t3) between the fourth circumferential-direction section SC4 and the third circumferential-direction section SC3 in the channel forming member 90, the first circumferential-direction section SC1 and the second circumferential-direction section SC2 can alleviate the difference in the wall thickness. Specifically, between the fourth circumferential-direction section SC4 and the third circumferential-direction section SC3, there are the first circumferential-direction section SC1 and second circumferential-direction section SC2 having intermediate wall thicknesses between the thickness of the fourth circumferential-direction section SC4 and the thickness of the third circumferential-direction section SC3. In this manner, in the present embodiment, the channel forming member 90 can alleviate the difference in the wall thickness between the fourth circumferential-direction section SC4 and the third circumferential-direction section SC3 (= t4 - t3), in the first circumferential-direction section SC1 and the second circumferential-direction section SC2. As a result, it is possible to reduce or eliminate a problem of stress that may occur due to a relatively large difference in wall thickness in the channel forming member 90.

Here, as in the present embodiment, the protrusions 91 in the channel forming member 90 similarly generates a difference in wall thickness, stress concentration is likely to occur around edges of the protrusions 91 or the like. In this regard, when positions of circumferentially end portions of the protrusions 91 are set in border portions between the third circumferential-direction section SC3 and the first circumferential-direction section SC1 and between the third circumferential-direction section SC3 and the second circumferential-direction section SC2, stress concentration in the border portions is likely to occur. That is, in this case, in the border portions, stress due to a difference in wall thickness (= t1 or t2 - t3) between the third circumferential-direction section SC3 and the first circumferential-direction section SC1 and between the third circumferential-direction section SC3 and the second circumferential-direction section SC2, and stress due to generation of the protrusions 91 are likely to occur at the same time.

Accordingly, in the present embodiment, the protrusions 91 preferably terminate in the first circumferential-direction section SC1 and in the second circumferential-direction section SC2 as shown in FIGS. 4 and 5. That is, the protrusions 91 in the third circumferential-direction section SC3 preferably extend continuously across a part of the first circumferential-direction section SC1, the part being on a side connected to the third circumferential-direction section, and across a part of the second circumferential-direction section SC2, the part being on a side connected to the third circumferential-direction section SC3. Thus, it is possible to reduce stress concentration that may occur in the border portions between the third circumferential-direction section SC3 and the first circumferential-direction section SC1 and between the third circumferential-direction section SC3 and the second circumferential-direction section SC2.

Note that, in the present embodiment, as viewed in the axial direction, the fourth circumferential-direction section SC4 of the channel forming member 90 is disposed to intersect a straight line L6 connecting an axial center of the first output member 61 (second axis C2) and an axial center of the rotating electrical machine 1 (first axis C1) (refer to FIG. 6B). Thus, as described above, the refrigerant supply unit 40 and the refrigerant discharge unit 42 can be disposed vertically with the axial center of the first output member 61 (second axis C2) interposed therebetween, and a space that may be a dead space can be efficiently utilized.

Next, preferable examples of arrangement of the fastening parts 500 of the channel forming member 90 will be described with reference to FIGS. 4 and 7 to 8.

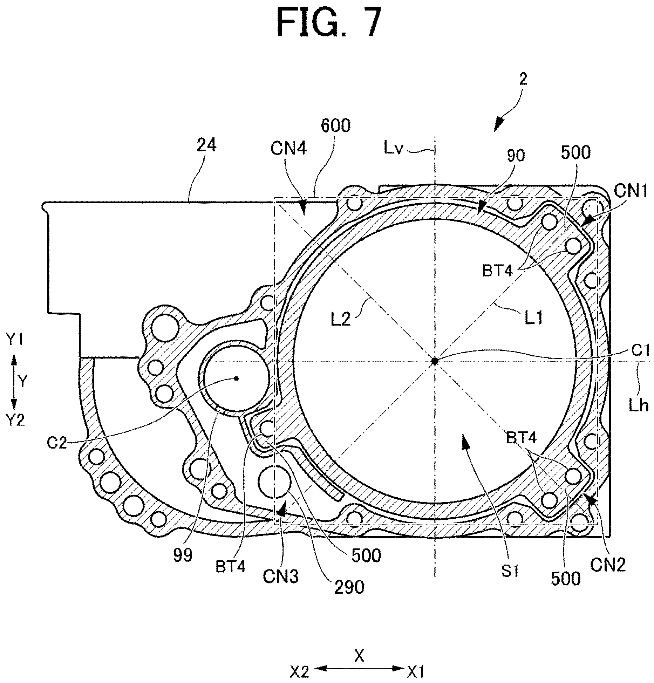

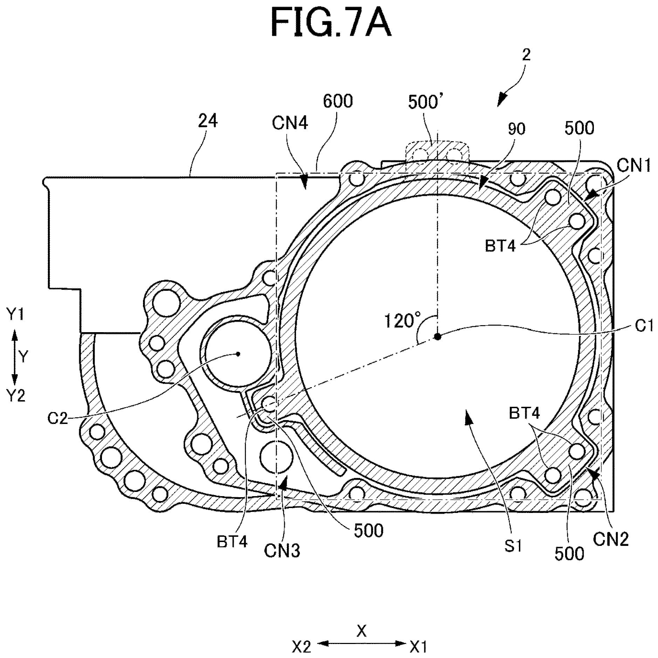

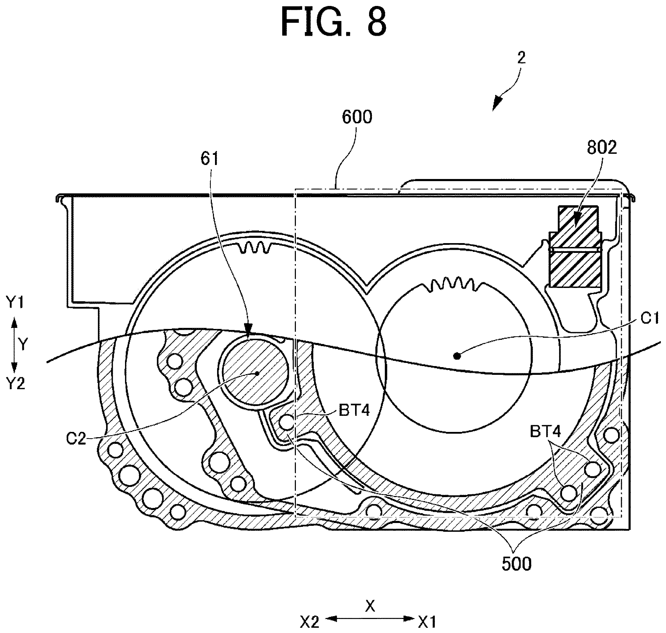

FIG. 7 is a side view schematically showing the vehicular drive device 100 according to the present embodiment. FIG. 8 is an explanatory view of preferable arrangement of the fastening parts 500, and is a side view schematically showing a relation with a wiring connector 802. In FIG. 8, the fastening parts 500 and the wiring connector 802 arranged at different positions in the axial direction are shown as viewed from the same side for convenience of description.

Hereinafter, preferable examples of arrangement of the fastening parts 500 will be described, (virtually) assuming a rectangle (in this case, a square) 600 circumscribing an outer shape of the rotating electrical machine 1 and is a rectangle (rectangle) 600 having two sides parallel to the up-down direction (refer to FIG. 7) as viewed in the axial direction. Note that the outer shape of the rotating electrical machine 1 according to the rectangle 600 may be an outer shape of the stator core 12 (base outer shape having a circular shape centered on the axial center of the rotating electrical machine 1).

As shown in FIGS. 4 and 7, the fastening parts 500 are provided at an A1-side end portion of the channel forming member 90. As viewed in the axial direction, the fastening parts 500 project radially outward from a circular outer shape of the channel forming member 90. Note that the fastening parts 500 may be formed integrally with the channel forming member 90 or may be separate bodies. The fastening parts 500 are fastened to the case 2 with bolts (not shown) (refer to bolt holes BT4). For example, the fastening parts 500 may be fastened to an end surface on an axial direction A1 side of the motor case part 21 (refer to FIG. 2) surrounding the rotating electrical machine 1. Thus, the channel forming member 90 is firmly fixed to the case 2 via the fastening parts 500. Note that, in a case where the fastening parts 500 are separate bodies from the channel forming member 90, the fastening parts may have a plate shape, and axial displacement of the channel forming member may be restrained by being in contact with an axial end surface of the channel forming member in the axial direction. The fastening parts in a form of a plate may restrain displacement of a channel forming member in the circumferential direction by being fitted into recesses that may be formed on an axial end surface of the channel forming member.

Each of the fastening parts 500 preferably overlaps at least one corner of four corners CN1 to CN4 of the rectangle 600 as viewed in the axial direction. In the example shown in FIG. 3, as shown in FIG. 7, the fastening parts 500 overlap the corner CN1 on the X1 side and the upper side (Y1 side) and the corner CN2 on the X1 side and on the lower side (Y2 side) among the four corners CN1 to CN4 in the case 2, as viewed in the axial direction. Here, the fastening parts 500 overlapping the corners as viewed in the axial direction may mean that portions or all of the fastening parts 500 overlap the corners as viewed in the axial direction. For example, the fastening parts 500 overlapping the corners as viewed in the axial direction may mean that the bolts (not shown) (refer to the bolt holes BT4) related to the fastening parts 500 overlap the corners as viewed in the axial direction. Furthermore, the corners where the fastening parts 500 overlap as viewed in the axial direction may be, of the rectangle 600, regions outside the rotating electrical machine 1 as viewed in the axial direction.

More specifically, for angles around the axial center of the rotating electrical machine 1 as viewed in the axial direction, among each of straight lines passing through the axial center (through the first axis C1) of the rotating electrical machine 1, a straight line Lh in the horizontal direction is set to 0 degrees or 180 degrees, and a straight line Lv in the up-down direction is set to 90 degrees or 270 degrees. At this time, as shown in FIG. 7, the corners CN1 and CN3 are on a first straight line L1 (a straight line passing through the axial center of the rotating electrical machine 1) in a direction of an angle of 45 degrees (or 225 degrees), and the corners CN2 and CN3 are on a second straight line L2 (a straight line passing through the axial center of the rotating electrical machine 1) in a direction of an angle of 135 degrees (or 315 degrees). Then, when four regions divided by the straight line Lh and the straight line Lv in the view in FIG. 7 are defined as a first quadrant to a fourth quadrant, "a fastening part 500 overlapping a corners (one of CN1 to CN4) as viewed in the axial direction" means that "the first straight line L1 or the second straight line L2 passing through the corner passes through the fastening part 500 in the same quadrant as the corner, and the fastening part 500 and the rotating electrical machine 1 overlap each other as viewed in the horizontal direction.". For example, the first straight line L1 passes through the fastening part 500 overlapping the corner CN1 in the first quadrant, the second straight line L2 passes through the fastening part 500 overlapping the corner CN2 in the second quadrant, and these two fastening parts 500 overlap the fastening parts 500 and the rotating electrical machine 1 as viewed in the horizontal direction.

Incidentally, if the fastening parts 500 fix the channel forming member 90 (to the case 2) insufficiently, inconveniences such as the cooling water leaking from the refrigerant channel 300 formed of the channel forming member 90, and oil intrusion into the refrigerant channel 300 may occur. In order to prevent such inconveniences, from a viewpoint of enhancing reliability of the fixing of the channel forming member 90 by the fastening parts 500, it is desirable that the fastening parts 500 be arranged at three or more points at substantially equal intervals (for example, in a case of three points, for example, at intervals of 120 degrees) along the circumferential direction.

For example, in FIG. 7 A, fastening parts 500' arranged at intervals of 120 degrees are virtually denoted by dotted lines. In this case, as can be seen from the fact that the fastening parts 500' extend outside of an outer shape (outer shape as viewed in the axial direction) of the case 2, a size of the case 2 (and accordingly, a size of the vehicular drive device 100) tends to increase. In particular, in a layout in which the first output member 61 is disposed in vicinity of the rotating electrical machine 1 as in the present embodiment, it is difficult to establish three or more fastening parts without the first output member 61 and the fastening parts interfering with each other.

In this regard, in the present embodiment, as described above, two of the three fastening parts 500 overlap the corner CN1 on the X1 side and the upper side (Y1 side) and the corner CN2 on the X1 side and on the lower side (Y2 side), as viewed in the axial direction. Thus, as shown in FIG. 7, the three fastening parts 500 can be arranged at relatively uniform intervals along the circumferential direction without increasing the size of the case 2 (and accordingly, the size of the vehicular drive device 100) and without interfering with the first output member 61. Note that the relatively uniform intervals may be, for example, angular intervals significantly different from 120 degrees, but, as being relatively uniform intervals, can ensure necessary fixing strength across the circumferential direction overall. For example, as viewed in the axial direction, a center (on the first axis C1) of the channel forming member 90 can be disposed in a triangle connecting the bolts (not shown) (refer to the bolt holes BT4) of the fastening parts 500 at three points. Thus, it is possible to reduce the size of the case 2 (and accordingly, the size of the vehicular drive device 100) while ensuring high reliability for fixing the channel forming member 90 by the fastening parts 500.

Furthermore, in the present embodiment, two bolts (not shown) (refer to the bolt holes BT4) are fastened to each of two of the three fastening parts 500. Thus, reliability for fixing the channel forming member 90 by the fastening parts 500 can be further enhanced.

Incidentally, as viewed in the axial direction, a region overlapping the corner CN1 among the four corners CN1 to CN4 is preferable as a region for wiring to the inverter case part 24. This is because the region is on the upper side where the inverter case part 24 is disposed. Furthermore, in particular, in a case where the inverter case part 24 extends to the X1 side with respect to the first axis C1 as viewed in the axial direction, the wiring in the inverter case part 24 is easily routed.

In this regard, in the present embodiment, the wiring connector 802 of an electronic component (not shown) is provided in a region overlapping the corner CN1 as viewed in the axial direction, between the rotating electrical machine 1 and the deceleration mechanism 34 in the axial direction. In this case, an electronic component (not shown) may be a low-voltage electronic component disposed in the motor housing chamber S1, and may include, for example, a sensor (for example, a resolver) that detects a rotation angle of the rotating electrical machine 1, an oil temperature sensor, and the like.

In this case, as viewed in the axial direction, one of the three fastening parts 500 overlaps the wiring connector 802 at the corner CN1. Thus, the wiring connector 802 and the fastening parts 500 can be efficiently established in a manner that the size of the case 2 (and accordingly, the size of the vehicular drive device 100) is reduced. In other words, in a case where the case 2 extends, by providing the wiring connector 802, to a region overlapping the corner CN1 as viewed in the axial direction, it is possible to prevent an increase in the size of the case 2 due to the fastening parts 500, by disposing a fastening part 500 to overlap the corner CN1 as viewed in the axial direction.

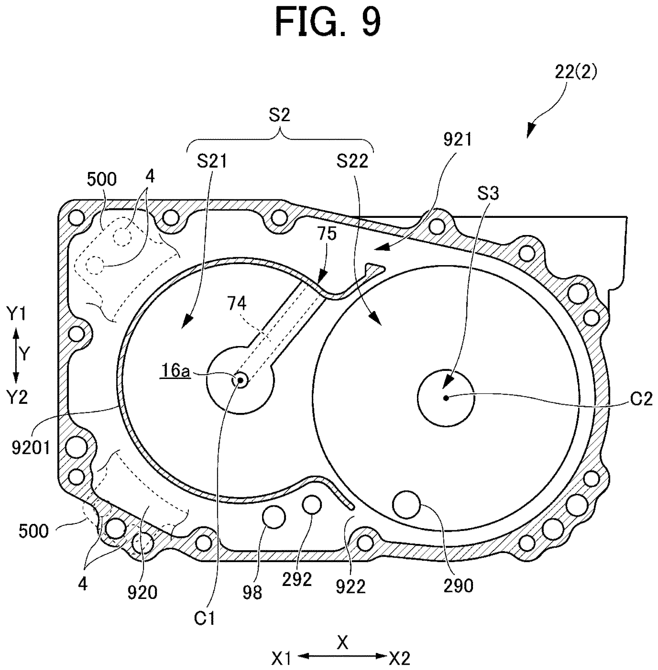

Next, a preferable a positional relationship between a catch tank 920 and the fastening parts 500 will be described with reference to FIG. 9.

FIG. 9 is a side view from the A2 side, schematically showing the vehicular drive device 100 according to the present embodiment. Hereinafter, of a transmission mechanism housing chamber S2, a part housing the deceleration mechanism 34 is also referred to as a "deceleration mechanism housing chamber S21", and a part housing the differential gear mechanism 5 is also referred to as a "differential gear housing chamber S22".

As shown in FIG. 9, in the deceleration mechanism housing chamber S21, the catch tank 920 extends radially outer side of a wall part 9201 in the axial direction around the deceleration mechanism 34, and has an inlet 921 at a position where oil scraped up by the rotation of the output gear 30 can be caught. Then, the catch tank 920 has a discharge port 922 opened to the differential gear housing chamber S22 at a lower portion. In this case, an axially A2-side end portion of a return channel 292 (an opening on a deceleration mechanism housing chamber S21 side) may be provided in vicinity of the discharge port 922. Thus, oil used for cooling a coil end 13 in a space S11 (refer to FIG. 2) in the motor housing chamber S1 can be relatively quickly returned to a lower portion (an oil sump in which the output gear 30 is immersed) in the differential gear housing chamber S22 via a lower portion of the catch tank 920. Note that the catch tank 920 may also communicate with a shaft center oil passage 15a of a rotor shaft 15 so as to supply oil to the shaft center oil passage 15a of the rotor shaft 15, and the like. Furthermore, the lower portion of the catch tank 920 represents a portion below a center of the catch tank 920 in the up-down direction, and refers to, for example, a portion below the first axis C1.

Note that, in FIG. 9, of a return channel 290 (disposition thereof is schematically shown by a circle in FIG. 9), an A2-side end portion is opened to the differential gear housing chamber S22, and an A1-side end portion communicates with an output shaft housing chamber S3. Furthermore, of the return channel 292 (disposition thereof is schematically shown by a circle in FIG. 9), an axially A1-side end portion communicates with the space S11 of the motor housing chamber S1, and the axially A2-side end portion communicates with a lower portion of the transmission mechanism housing chamber S2 (lower portion of the catch tank 920). Furthermore, an oil temperature sensor 98 (disposition thereof is schematically shown by a circle in FIG. 9) is provided at a lower portion of the catch tank 920. In this case, the oil temperature sensor 98 is provided in vicinity of the discharge port 922 of the catch tank 920. Thus, the oil temperature sensor 98 is less likely to be above an oil level depending on a traveling state of a vehicle, and therefore, reliability of sensor information from the oil temperature sensor 98 can be enhanced.

The oil scraped up by the rotation of the output gear 30 (refer to FIG. 2) of the differential gear mechanism 5 is introduced from the transmission mechanism housing chamber S2 to the output shaft housing chamber S3. Then, while flowing downward by gravity, the oil lubricates a bearing BR2 and the like on the A1 side, the bearing BR2 supporting the first output member 61. Then, the oil returns from the output shaft housing chamber S3 to the differential gear housing chamber S22 via an end portion (axially A2-side end portion) of the return channel 290 at a position lower than the second axis C2. Thus, the rotation of the output gear 30 of the differential gear mechanism 5 can scrape up the oil again.

Furthermore, the oil scraped up by the rotation of the output gear 30 of the differential gear mechanism 5 is introduced into the shaft center oil passage 15a of the rotor shaft 15 via the catch tank 920. Specifically, a communication port 75 is provided at an upper portion of the catch tank 920. The communication port 75 is an opening on a radially outer side of a communication path 74 in the radial direction, and an end portion on a radially inner side of the communication path 74 is connected to a shaft center oil passage 16a of the input member 16. In this case, the oil scraped up by the rotation of the output gear 30 of the differential gear mechanism 5 enters from the communication port 75 of the catch tank 920 to the communication path 74, and then is supplied into the shaft center oil passage 15a of the rotor shaft 15 via the shaft center oil passage 16a. As described above, the oil supplied to the shaft center oil passage 15a is ejected from an ejection vent 15b to the coil end 13 of the rotating electrical machine 1. Thus, the coil end 13 can be efficiently cooled by the oil scraped up by the rotation of the output gear 30 of the differential gear mechanism 5. Then, the oil ejected to the coil end 13 in a space S12 of the motor housing chamber S1 is returned from the space S 12 to the transmission mechanism housing chamber S2 via the end portion (axially A2-side end portion) of the return channel 290 at the position lower than the second axis C2. Furthermore, the oil ejected to the coil end 13 in a space S 11 of the motor housing chamber S1 is returned from the space S 11 to the transmission mechanism housing chamber S2 via the end portion (axially A2-side end portion) of the return channel 292 at the position lower than the second axis C2. The oil returned to the transmission mechanism housing chamber S2 in this manner is returned to the differential gear housing chamber S22 from the discharge port 922 below the second axis C2 in the catch tank 920. Thus, the rotation of the output gear 30 of the differential gear mechanism 5 can scrape up the oil again.

In the present embodiment, the catch tank 920 is formed so as to overlap the fastening parts 500 as viewed in an axial direction A2. In FIG. 9, the fastening parts 500, which are not seen in the same view as viewed from the X2 side, are schematically denoted by broken lines in transparent view. In the example shown in FIG. 9, the catch tank 920 overlaps the two upper and lower fastening parts 500 on the X1 side as viewed in the axial direction A2. However, the catch tank 920 may overlap only one of the two fastening parts 500 (for example, the upper fastening part 500). Furthermore, in the example shown in FIG. 9, the catch tank 920 overlaps substantially the entire fastening part 500 on the X1 side and on the upper side as viewed in the axial direction A2. However, the catch tank 920 may overlap a part of the fastening part 500 on the X1 side and on the upper side. Furthermore, in the example shown in FIG. 9, the catch tank 920 overlaps a part of the fastening part 500 on the X1 side and on the lower side as viewed in the axial direction A2. However, the catch tank 920 may overlap substantially the entire fastening part 500 on the X1 side and on the upper side.

According to such a positional relationship between the catch tank 920 and the fastening parts 500, dead space generated due to a shape of the deceleration mechanism housing chamber S21 can be effectively utilized. That is, in the motor housing chamber S 1, inside of an outer boundary (outer boundary as viewed in the axial direction A2) of a body of the case 2 determined according to the catch tank 920 becomes an available space (dead space) without causing an increase in the size of the case 2. Therefore, the dead space can be effectively utilized by disposing the fastening parts 500 at positions overlapping the catch tank 920 as viewed in the axial direction. Thus, it is possible to prevent an increase in the size of the case 2 due to the fastening parts 500 (In particular, an increase in size to the X1 side or an increase in size to the Y1 side or the Y2 side).

Although each embodiment has been described in detail above, the present invention is not limited to a specific embodiment, and various modifications and changes can be made within the scope described in the claims. Furthermore, all or a plurality of the components in the above-described embodiments can be combined.

### REFERENCE SIGNS LIST

100: Vehicular drive device, 1: Rotating electrical machine, 2: Case, 90: Channel forming member, 300: Refrigerant channel, 34: Deceleration mechanism (transmission mechanism), 5: Differential gear mechanism (transmission mechanism), 61: First output member (shaft member), 500: Fastening part (first fastening part, second fastening part), 802: Wiring connector, 600: Rectangle, CN1 to CN4: Corner, C1: First axis (axial center of rotating electrical machine), C2: Second axis (axial center of shaft member), and W: Wheel

## Claims

1. A vehicular drive device comprising:
a rotating electrical machine;
a case that houses the rotating electrical machine; and
a channel forming member disposed between an outer peripheral surface of the rotating electrical machine and an inner peripheral surface of the case, and forming a refrigerant channel through which a refrigerant passes, wherein
the channel forming member has a cylindrical shape and has one end side in an axial direction fastened to the case, and
in a case where a rectangle circumscribing an outer shape of the rotating electrical machine and having two sides parallel to an up-down direction as viewed in an axial direction, each of fastening parts of the channel forming member with respect to the case overlaps at least one corner of four corners of the rectangle as viewed in an axial direction.

2. The vehicular drive device according to claim 1, further comprising a wiring connector of an electronic component provided in association with the rotating electrical machine, wherein
the wiring connector overlaps the at least one corner as viewed in an axial direction.

3. The vehicular drive device according to claim 1 or 2, further comprising a transmission mechanism that transmits drive force from the rotating electrical machine to a wheel via a shaft member, wherein
an axial center of the shaft member is parallel to an axial center of the rotating electrical machine, and offsets to one side of one direction intersecting in an axial direction, and
the at least one corner includes a corner on an upper side and on another side of the one direction.

4. The vehicular drive device according to claim 3, wherein
the fastening parts are provided at three or more points, and
two of the three or more fastening parts are disposed on two corners on another side of the one direction, among the four corners.

5. The vehicular drive device according to claim 3, wherein
the case further houses the transmission mechanism and includes a catch tank that catches oil scraped up by rotation of a gear of the transmission mechanism, and
the catch tank overlaps the at least one corner as viewed in an axial direction.
